# EUROPEAN PATENT APPLICATION

(11) **EP 2 157 327 A1**
(43) Date of publication of application: **24.02.2010**
(21) Application number: 08752334.6
(22) Date of filing: 02.05.2008
(51) Int. Cl.: F16C 35/077, F16C 33/58

(54) **CREEP-RESISTANT ROLLING BEARING**

(30) Priority: 14.05.2007 JP 2007127684
(71) Applicant: NTN Corporation, Osaka-shi, Osaka 550-0003 (JP)
(72) Inventor: MURAMATSU, Makoto, Iwata-shi Shizuoka 438-0037 (JP)
(74) Representative: Grünecker, Kinkeldey, Stockmair & Schwanhäusser Anwaltssozietät
(86) International application number: PCT/JP2008/058429
(87) International publication number: WO 2008/139977

(57) **Abstract**

The object is to reduce the resistance when a creep-free rolling bearing is pressed into a housing, thereby preventing cutting of resin bands.

The resin bands 7 are each fitted in an annular groove 6 formed in the outer race 2 and each have a protruding portion 7a protruding from the annular groove 6. The protruding portion 7a has a trapezoidal cross-section having two sides, with one of the two sides being an inclined surface 7b extending obliquely radially outwardly toward the other of the two sides with a predetermined inclination angle α.

## Description

### TECHNICAL FIELD

The present invention relates to a creep-free rolling bearing which is free of creeping of the outer race.

### BACKGROUND ART

In e.g. a rolling bearing of the type including an outer race made of steel and fitted in a housing made of a metal having a larger thermal expansion coefficient than the steel forming the outer race, creeping of the outer race may occur when the interference between the housing and the outer race decreases due to the difference in thermal expansion coefficient therebetween. In order to prevent such creeping of the outer race, a creep-free rolling bearing is known in which a resin band having a larger thermal expansion coefficient than the housing is fitted in a circumferential annular groove formed in the radially outer surface of the outer race so as to partially protrude from the radially outer surface of the outer race (see e.g. Patent document 1).

The resin bands are made of such resins as polyamide 9T (PA9T), polyamide 11 (PA11), polyamide 66 (PA66) or polybutylene terephthalate (PBT).

Patent document 1: JP patent publication 2003-343590A

### DISCLOSURE OF THE INVENTION

### OBJECT OF THE INVENTION

In a creep-free rolling bearing having a resin band fitted in an annular groove formed in the radially outer surface of the outer race so as to protrude from the radially outer surface, since it is necessary to press-fit the outer race into the housing with sufficient interference between the resin band and the housing, the resin band tends to be cut due to large resistance when the outer race is press-fitted into the housing.

An object of the present invention is to reduce the resistance when a creep-free rolling bearing is press-fitted into a housing, thereby preventing cutting of the resin band.

### MEANS TO ACHIEVE THE OBJECT

In order to achieve this object, the present invention provides a creep-free rolling bearing comprising an outer race having a radially outer surface in which an annular groove is formed, and a resin band fitted in the annular groove and having a protruding portion protruding from the radially outer surface of the outer race, **characterized in that** the protruding portion has a trapezoidal cross-section having two sides, and that at least one of the two sides is an inclined surface extending obliquely radially outwardly toward the other of the two sides with a predetermined inclination angle.

With this arrangement, since the protruding portion has a trapezoidal cross-section having two sides and at least one of the two sides is an inclined surface extending obliquely radially outwardly toward the other of the two sides with a predetermined inclination angle, by press-fitting this bearing into the housing with the inclined surface first, it is possible to reduce the resistance when the bearing is press-fitted into the housing, thereby preventing cutting of the resin band.

If a plurality of the above-mentioned resin bands are fitted in a plurality of the above-mentioned annular grooves, respectively, the inclined surfaces of the respective protruding portions are preferably arranged to face in the same direction.

Preferably, the protruding portion of the resin band or each of the resin bands has a trapezoidal cross-section having two sides which both extend obliquely radially outwardly toward each other with the inclination angle. With this arrangement, the direction in which the resin bands and thus the outer race are press-fitted into the housing is not restricted.

The inclination angle of the above-mentioned inclined surface or surfaces is 10 to 20°, preferably 10 to 15°. If this inclination angle is less than 10°, the top surface of the trapezoidal protruding portion is too narrow in width to maintain sufficient interference with respect the housing. If the inclination angle is larger than 20°, the resistance during press-fitting is excessive.

### ADVANTAGES OF THE INVENTION

Since the protruding portion has a trapezoidal cross-section having two sides, and at least one of the two sides is an inclined surface extending obliquely radially outwardly toward the other of the two sides with a predetermined inclination angle, by press-fitting the outer race of the creep-free rolling bearing into a housing with the inclined surface first, it is possible to reduce the resistance during press-fitting and thus to prevent cutting of the resin band.

Preferably, the protruding portion of the resin band or each of the resin bands has a trapezoidal cross-section having two sides which both extend obliquely radially outwardly toward each other with the inclination angle. With this arrangement, the direction in which the resin bands and thus the outer race are press-fitted into the housing is not restricted.

### BRIEF DESCRIPTION OF THE DRAWINGS

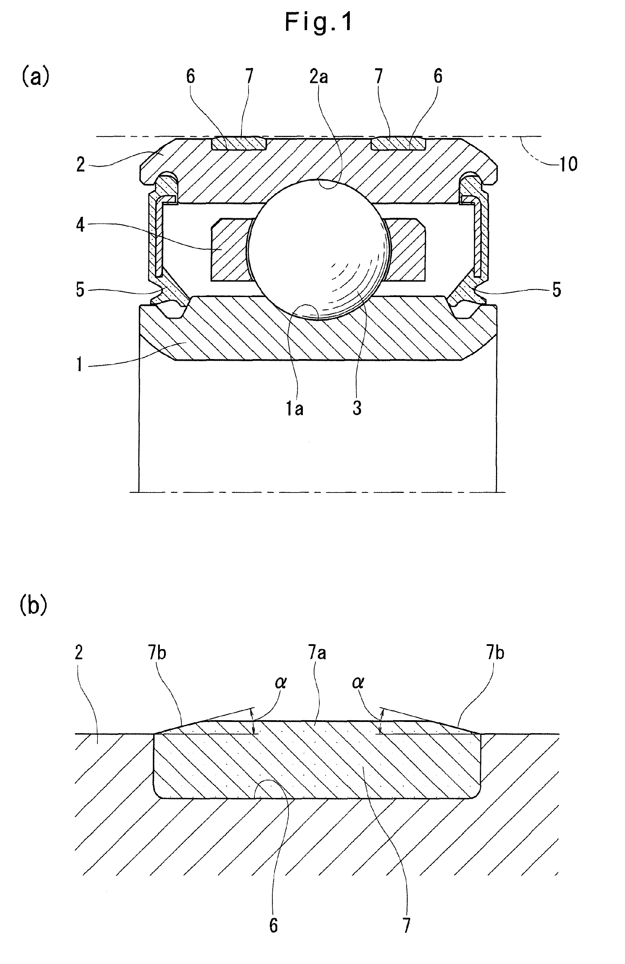

Fig. 1(a) is a partially omitted vertical sectional view of a creep-free rolling bearing embodying the present invention; and
Fig. 1(b) is a partial enlarged sectional view of Fig. 1(a), showing how a resin band is fitted.

### DESCRIPTION OF THE NUMERALS

- 1.: Inner race
- 2.: Outer race
- 1a,: 2a. Raceway groove
- 3.: Ball
- 4.: Retainer
- 5.: Seal member
- 6.: Annular groove
- 7.: Resin band
- 7a.: Protruding portion
- 7b.: Inclined surface
- 10.: Housing

### BEST MODE FOR EMBODYING THE INVENTION

The embodiment of the present invention is now described with reference to the drawings. As shown in Fig. 1(a), the creep-free rolling bearing of the embodiment is a deep groove ball bearing comprising inner and outer races 1 and 2 formed with raceway grooves 1a and 2a, respectively, a plurality of balls 3 disposed between the raceway grooves 1a and 2a, and a retainer 4 retaining the balls 3. Both ends of the bearing are sealed by seal members 5, respectively. The outer race 2 is fitted in the radially inner surface of a housing 10. Two circumferential annular grooves 6 are formed in the radially outer surface of the outer race 2. Resin bands 7 are fitted in the respective annular grooves 6. The bands 7 are made of PA11, which has a larger thermal expansion coefficient than the housing 10.

As shown in Fig. 1(b) on an enlarged scale, the resin bands 7 are fitted in the respective annular grooves 6 so as to protrude from the radially outer surface of the outer race 2. The portion 7a of each band 7 protruding from the radially outer surface of the outer race 2 has a trapezoidal cross-section, with the side surfaces thereof inclined radially outwardly toward each other with an inclination angle of α. In the embodiment, the inclination angle α is 15°. With this arrangement, the direction in which the resin bands 7 and thus the outer race 2 are press-fitted into the housing 10 is not restricted.

### EXAMPLES

As shown in Table 1, three deep groove ball bearings (Examples 1 to 3 of the invention) were prepared which have the resin bands as described above and each have an inclination angle α which is different from the inclination angles α of the other two examples. As a Comparative Example, a deep groove ball bearing was also prepared which includes resin bands similar to those of Examples of the Invention but having a rectangular cross-section. The deep groove ball bearings of Examples 1 to 3 of the invention and Comparative Example all measured 23 mm in outer diameter, 8 mm in inner diameter and 14 mm in width.

**Table 1**

| | Cross-section of protruding portions | Inclination angle α | Press-fitting force N | Resin bands cut? |
|---|---|---|---|---|
| Example 1 of the invention | Trapezoid | 10° | 750 | No |
| Example 2 of the invention | Trapezoid | 15° | 912 | No |
| Example 3 of the invention | Trapezoid | 20° | 1010 | No |
| Comparative Example | Rectangle | - | 1203 | Yes |

A press-fitting test was conducted in which the deep groove ball bearings of Examples 1 to 3 and Comparative Example were pressed into a housing with interference between the respective resin bands and the housing. For each bearing, the press-fitting force was measured and also, it was determined whether or not the resin bands had been cut. Interference: 0.024 mm
Press-fitting speed: 420 mm/minute
Test temperature: Room temperature

The results of the press-fitting test are also shown in Table 1. For Comparative Example, of which the protruding portions of the resin bands have a rectangular cross-section, press-fitting force was extremely large, and the resin bands had been cut. In contrast, for Examples 1 to 3 of the invention, the press-fitting forces were significantly lower, so that the resin bands had not been cut. Among Examples of the invention, for Examples 1 and 2, of which the inclination angles α were 10° and 15°, respectively, the pressing forces were lower than for Example 3, of which the inclination angle α was 20°, so that it was possible to smoothly press-fit the bearings of Examples 1 and 2.

In the above-described embodiment, two resin bands were fitted in the radially outer surface of the outer race so that their protruding portions have a trapezoidal cross-section having inclined surfaces on both sides extending radially outwardly toward each other. But instead, the bearing according to the invention may have only one or three or more of such resin bands. Also alternatively, the protruding portion may have a trapezoidal cross-section of which only the front one of the two sides with respect to the press-fitting direction is inclined radially outwardly toward the other side. The creep-free rolling bearing according to the present invention is not limited to a deep groove ball bearing but may be a different type of rolling bearing such as an angular ball bearing or a roller bearing.

## Claims

1. A creep-free rolling bearing comprising an outer race having a radially outer surface in which an annular groove is formed, and a resin band fitted in the annular groove and having a protruding portion protruding from the radially outer surface of the outer race, **characterized in that** the protruding portion has a trapezoidal cross-section having two sides, and that at least one of the two sides is an inclined surface extending obliquely radially outwardly toward the other of the two sides with a predetermined inclination angle.

2. The creep-free rolling bearing of claim 1 wherein there are a plurality of said annular grooves, wherein a plurality of said resin bands are fitted in the respective annular grooves, and wherein the inclined surfaces of the respective protruding portions face in the same direction.

3. The creep-free rolling bearing of claim 1 or 2 wherein the protruding portion of the resin band or each of the resin bands has a trapezoidal cross-section having two sides which extend obliquely radially outwardly toward each other with said inclination angle.

4. The creep-free rolling bearing of any of claims 1 to 3 wherein said inclination angle is 10 to 20°.
